Europäisches Patentamt

**European Patent Office**

Office européen des brevets

(11) Veröffentlichungsnummer: **0 166 925**
**A1**

(12) # EUROPÄISCHE PATENTANMELDUNG

(21) Anmeldenummer: **85105791.9**

(22) Anmeldetag: **11.05.85**

(51) Int. Cl.⁴: **H 01 B 7/36**
**B 41 F 23/04, B 41 F 17/10**
**B 41 J 3/04**

(30) Priorität: **04.07.84 CH 3215/84**

(43) Veröffentlichungstag der Anmeldung:
**08.01.86 Patentblatt 86/2**

(84) Benannte Vertragsstaaten:
**AT BE CH DE FR GB IT LI NL SE**

(71) Anmelder: **CONTRAVES GmbH**
**Hans-Stiessberger-Strasse 2a**
**D-8013 Haar(DE)**

(72) Erfinder: **Eblen, Otto**
**Fischenzstrasse 6E**
**D-7750 Konstanz(DE)**

(72) Erfinder: **Kohler, Franz, Dr.**
**Schützenstrasse 7b**
**D-7758 Meersburg(DE)**

(72) Erfinder: **Podlesny, Norbert**
**Hallstattweg 13**
**D-8025 Unterhaching(DE)**

(74) Vertreter: **Althoff, Gerhard et al,**
**Contraves AG Schaffhauserstrasse 580**
**CH-8052 Zürich(CH)**

(54) **Verfahren und Vorrichtung zum Anbringen von Markierungen an isolierte Kabel.**

(57) Unter Verwendung eines an sich bekannten Tintenstrahldrukkers wird ein Verfahren und eine Vorrichtung zum Anbringen von Markierungen in Gestalt von Zeichen, Buchstaben und/oder Zahlen oder dergleichen an ein isoliertes, beispielsweise kunststoffummanteltes Kabel vorgeschlagen.

Das erfindungsgenmässe Verfahren zeichnet sich dadurch aus, dass das an dem Tintenstrahldrucker (50) vorbeigeführte Kabel (30) mindestens im Bereich der mit Zeichen versehenen Mantelfläche im wesentlichen durch Erwärmung mit geeigneten Mitteln physikalisch und chemisch derart verändert wird, dass eine innige, abriebfeste Verbindung der aufgespritzten Tintenflüssigkeit mit der Isolations-Oberflächenstruktur entsteht.

Die Vorrichtung ist im wesentlichen gekennzeichnet durch eine dem Tintenstrahldrucker (50) in Bewegungsrichtung unmittelbar nachgeordnete Einrichtung (40) mit Mitteln zur Erwärmung, Abkühlung und Trocknung der Tintenflüssigkeit.

EP 0 166 925 A1

Croydon Printing Company Ltd

Verfahren und Vorrichtung zum Anbringen von Markierungen
an isolierte Kabel

Die Erfindung richtet sich auf ein Verfahren und eine Vorrichtung zum Anbringen von Markierungen in Gestalt von
Zeichen, Buchstaben und/oder Zahlen oder dergleichen an
isolierte Kabel mittels einer beispielsweise als Tintenstrahldrucker ausgebildeten Beschriftungseinheit.

In der bekannten Verdrahtungs- und Verkabelungstechnik
kommt neben der farblichen Unterscheidung auch der speziellen
Kennzeichnung oder Markierung der einzelnen Kabel eine erhebliche Bedeutung zu. Bei den bisherigen Methoden wurden
die die Zeichen wiedergebenden, gegebenenfalls auch beheizbaren Markierelemente mit einem mit sublimierbarer Farbe
versehenen Träger zur kontaktierenden Anlage gebracht und
anschliessend intermittierend auf die zu markierenden Fläche übertragen.

Die bekannten Methoden eignen sich nicht zum Kennzeichnen
von modernen, isolierten Kabeln oder dergleichen, die aufgrund ihrer speziellen Anforderungen mit relativ harten
Isolier-Manteloberflächen versehen sind und somit keine ausreichende Haftung der aufgebrachten Kennzeichen gewährleisten.

Ausgehend von diesem Stand der Technik ist es die Aufgabe
der Erfindung, unter Anwendung eines an sich bekannten Tintenstrahldruckers ein Verfahren und eine Vorrichtung vorzuschlagen, die die Nachteile der bekannten Verfahren vermeiden und ein abriebfestes Anbringen von Kennzeichen auf
isolierte Kabel oder dergleichen gewährleisten.

Gelöst wird die Aufgabe bezüglich des Verfahrens dadurch, dass das an dem Tintenstrahldrucker vorbeigeführte Kabel mindestens im Bereich der mit Zeichen versehenen Manteloberfläche durch Erwärmung physikalisch und chemisch derart verändert wird, dass eine abriebfeste Verbindung der aufgespritzten Tintenflüssigkeit mit der Oberflächenstruktur und unmittelbar danach eine Abkühlung und Trocknung derselben erfolgt.

Das erfindungsgemässe Verfahren mit den kennzeichnenden Merkmalen hat den Vorteil, dass durch die auf die jeweilige Isolierung regelbare Wärmebehandlung sich eine Veränderung der Oberflächenstruktur ergibt und dadurch eine innige, abriebfeste Verbindung zwischen den aufgespritzten Zeichen und der Isolation erreicht wird, ohne dabei die Isolation zu beschädigen oder sichtbar zu verändern. Als besonders vorteilhaft hat sich die Wärmebehandlung mittels Laserstrahlung herausgestellt.

Die erfindungsgemässe Vorrichtung ist dadurch gekennzeichnet, dass eine in Bewegungsrichtung des zu markierenden Kabels dem Tintenstrahldrucker unmittelbar nachgeordnete Einrichtung mit Mitteln zur Erwärmung, Abkühlung und Trocknung der aufgespritzten Tintenflüssigkeit vorgesehen ist.

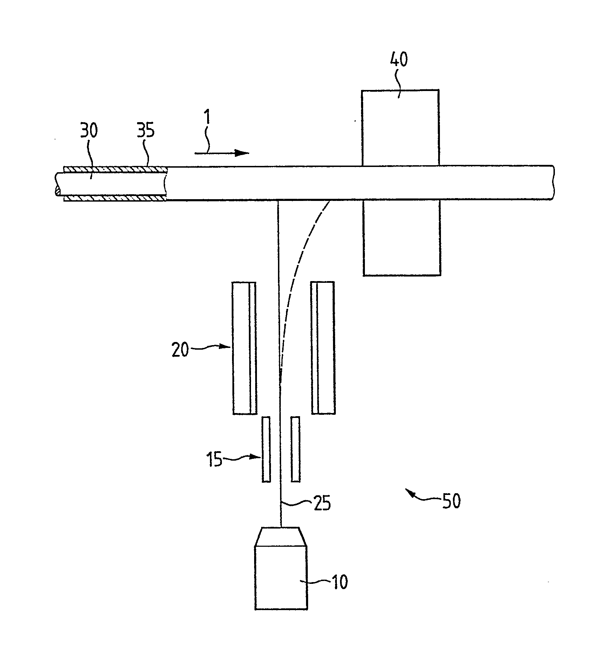

Eine Beschriftungseinheit zur Durchführung des erfindungsgemässen Verfahrens sowie eine Vorrichtung dazu werden nachstehend anhand der Zeichnung beschrieben.
In der als Schema dargestellten Zeichnung ist mit 50 eine Beschriftungseinheit bezeichnet. Die als Tintenstrahldrukker ausgebildete Beschriftungseinheit 50 umfasst im wesentlichen einen Spritzkörper 10, eine erste Baueinheit 15 mit Mitteln zur Aufladung und Detektierung sowie eine zweite Baueinheit 20 mit Mitteln zur Ablenkung von Tintentropfen. Von dem Spritzkörper 10 wird eine durch eine Linie 25 vereinfacht dargestellte Anzahl Tintentropfen der ersten Baueinheit 15 und anschliessend der zweiten Baueinheit 20 zugeführt. Bei diesem an sich bekannten Vorgang durchfliegen die Tintentropfen die erste Baueinheit 15 und werden von der zweiten Baueinheit 20 abgelenkt und auf einen zugeordneten Aufzeichnungsträger aufgespritzt.

Bei dem dargestellten Ausführungsbeispiel ist der Aufzeichnungsträger ein isoliertes, insbesondere ein mit einem Kunststoffmantel 35 isoliertes Kabel 30, welches zum fortlaufenden und/oder intermittierendem Anbringen von Markierungen in Gestalt von Zeichen, Buchstaben und/oder Zahlen oder dergleichen mit nicht dargestellten Mitteln in Pfeilrichtung 1 an der Beschriftungseinheit 50 vorbeigeführt wird.

Bei dem erfindungsgemässen Verfahren durchläuft das Kabel 30 eine der Beschriftungseinheit 50 in geringem, funktionssicherem Abstand zugeordnete Einrichtung 40. Mit der Einrichtung 40 wird unmittelbar nach dem Aufspritzvorgang die bespritzte Oberfläche des Isolationsmantels 35 durch entsprechende Erwärmung physikalisch und chemisch derart verändert, dass eine Verbindung der aufgespritzten Tintenflüssigkeit mit der Oberflächenstruktur der Isolation 35 und unmittelbar danach eine Abkühlung und Trocknung erfolgt. Als mögliche Wärmequellen der Einrichtung 40 kann ein Laser-, Infrarot- oder ein Heissluftelement Anwendung finden. Die Erwärmungsphase ist hierbei vorzugsweise mit der Trocknungsphase kombiniert.

Patentansprüche:

1. Verfahren zum Anbringen von Markierungen in Gestalt von Zeichen, Buchstaben und/oder Zahlen oder dergleichen an isolierte Kabel mittels einer beispielsweise als Tintenstrahldrucker ausgebildeten Beschriftungseinheit, dadurch gekennzeichnet, dass das an dem Tintenstrahldrukker vorbeigeführte Kabel mindestens im Bereich der mit Zeichen versehenen Manteloberfläche durch Erwärmung physikalisch und chemisch derart verändert wird, dass eine abriebfeste Verbindung der aufgespritzten Tintenflüssigkeit mit der Oberflächenstruktur und unmittelbar danach eine Abkühlung und Trocknung derselben erfolgt.

2. Verfahren nach Anspruch 1, dadurch gekennzeichnet, dass zur Erwärmung der Manteloberfläche ein regelbares Laser-Infrarot- oder Heissluftelement verwendet wird.

3. Verfahren nach Anspruch 1 und 2, dadurch gekennzeichnet, dass die Erwärmungsphase der Manteloberfläche mit der Trocknungsphase der Tintenflüssigkeit annähernd zeitgleich miteinander kombiniert wird.

4. Vorrichtung zur Durchführung des Verfahrens nach einem der vorgehenden Ansprüche, unter Verwendung eines Tintenstrahldruckers mit Mitteln zum Erzeugen einer Folge geladener, detektierter und abgelenkter Tintentropfen, dadurch gekennzeichnet, dass eine in Bewegungsrichtung (1) des zu markierenden Kabels (30) dem Tintenstrahldrucker (50) unmittelbar nachgeordnete Einrichtung (40) mit Mitteln zur Erwärmung, Abkühlung und Trocknung der aufgespritzten Tintenflüssigkeit vorgesehen ist.

5. Vorrichtung nach Anspruch 4, dadurch gekennzeichnet, dass als Wärmequelle in der Einrichtung (40) ein Laser-, Infrarot- oder Heissluftelement vorgesehen ist.

# Europäisches Patentamt

## EUROPÄISCHER RECHERCHENBERICHT

| | EINSCHLÄGIGE DOKUMENTE | | EP 85105791.9 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) | |
| X | DE - A1 - 1 665 687 (SIEMENS AG) | 1,4 | H 01 B 7/36 | |
| A | | 2,3,5 | B 41 F 23/04 | |
| | * Gesamt * | | B 41 F 17/10 | |
| | -- | | B 41 J 3/04 | |
| A | DE - A1 - 2 944 103 (SIEMENS AG) | 1-5 | | |
| | * Ansprüche 1,15 * | | | |
| | -- | | | |
| A | DE - A1 - 2 716 705 (OLYMPIA WERKE) | 2,5 | | |
| | * Anspruch 1 * | | | |
| | -- | | | |
| A | DE - A1 - 1 690 377 (VEREINIGTE DRAHT- UND KABELWERKE AG) | 1,4 | | |
| | * Ansprüche 1,4 * | | | |
| | -- | | RECHERCHIERTE SACHGEBIETE (Int. Cl.4) | |
| A | DE - A1 - 2 427 827 (KABEL- UND METALLWERKE GUTEHOFFNUNGSHÜTTE AG) | 1,2,4,5 | H 01 B | |
| | * Ansprüche 1,2 * | | B 41 F | |
| | ---- | | B 41 J | |
| | | | G 01 D | |

Der vorliegende Recherchenbericht wurde für alle Patentansprüche erstellt.

| Recherchenort | Abschlußdatum der Recherche | Prüfer |
|---|---|---|
| WIEN | 06-08-1985 | MEISTERLE |